# EUROPÄISCHE PATENTSCHRIFT

(11) **EP 1 975 421 B1**
(45) Veröffentlichungstag und Bekanntmachung des Hinweises auf die Patenterteilung: **27.05.2009**
(21) Anmeldenummer: 07006356.5
(22) Anmeldetag: 28.03.2007
(51) Int. Cl.: F16B 25/00

(54) **Gewindeformende Schraube**
Self-tapping screw
Vis autotaraudeuse

(43) Veröffentlichungstag der Anmeldung: 01.10.2008
(73) Patentinhaber: M-Cut Systems GmbH & Co. KG, 30900 Bissendorf (DE)
(72) Erfinder: Winkelmann, Michael, 31535 Neustadt (DE); Winkelmann, Hans-Peter, 21244 Buchholz (DE)
(74) Vertreter: Körner, Peter

(56) Entgegenhaltungen:
- DE-U1- 20 206 589
- GB-A- 2 042 120
- GB-A- 2 344 629

## Beschreibung

Die Erfindung betrifft eine gewindeformende Schraube nach dem Oberbegriff des Anspruchs 1 sowie eine in eine Bohrung eingeschraubte, gewindeformende Schraube sowie ein Verfahren zum Befestigen einer gewindeformenden Schraube in einer Bohrung in einem festen Verankerungsgrund.

Bekannte Schrauben dieser Art sind in der EP 0 623 759 B1, der DE 299 17 000 U1, der DE 10 2005 017 596 A1, der DE 202 06 589 U1 sowie der GB 2 344 629 B offenbart. Derartige Schrauben werden beispielsweise ohne Dübel in eine vorgebohrte Bohrung in Beton, Mauerwerk oder dergleichen Werkstoff eingeschraubt. Dabei schneidet sich ihr Gewindegang in die Wandung der Bohrung ein.

Der Erfindung liegt die Aufgabe zugrunde, eine gewindeformende Schraube der im Oberbegriff des Anspruchs 1 angegebenen Art alternativ so auszubilden, dass ein einfaches und zuverlässiges Befestigen von Bauteilen an einem festen Verankerungsgrund ohne Verwendung von Dübeln oder anderen Hilfsmitteln möglich ist.

Diese Aufgabe wird bei einer gewindeformenden Schraube nach dem Oberbegriff des Anspruchs 1 dadurch gelöst, dass die Schraube drei oder mehr, vorzugsweise jedoch drei Gewindegänge aufweist, die parallel zueinander ausgebildet sind und sich helixförmig zumindest teilweise über die Länge des Schaftes erstrecken. Die Gewindegänge weisen erfindungsgemäß unterschiedliche Außendurchmesser auf, wobei der Außendurchmesser eines ersten Gewindeganges größer ist als der Außendurchmesser des in Setzrichtung dem ersten Gewindegang folgenden zweiten Gewindeganges, und der Außendurchmesser des zweiten Gewindeganges größer ist als der Außendurchmesser des in Setzrichtung dem zweiten Gewindegang folgenden dritten Gewindeganges. Der Abstand der Gewindegänge zueinander ist hierbei erfindungsgemäß unterschiedlich.

Durch eine derart ausgebildete gewindeformende Schraube ist ein einfaches und zuverlässiges Befestigen von Bauteilen an einem festen Verankerungsgrund ohne Verwendung von Dübeln oder anderen Hilfsmitteln möglich.

Der Begriff "fester Verankerungsgrund" ist weit gefasst. Neben Beton, Mauerwerk oder dergleichen Werkstoff wird unter einem festen Verankerungsgrund beispielsweise auch ein bröckeliges Mauerwerksmaterial, weicher Ziegelstein oder ein anderer weicher Stein verstanden. Auch Holz kann einen festen Verankerungsgrund bilden. Bevorzugt ist Gasbeton als fester Verankerungsgrund.

Es hat sich als vorteilhaft herausgestellt, dass der zweite und dritte Gewindegang, die jeweils einen geringeren Außendurchmesser als der erste Gewindegang aufweisen, diejenigen Gewindegänge sind, die als erste in die Wandung der Bohrung einschneiden und entsprechend die Hauptbelastung beim Einschrauben der Schraube in die Bohrung aufnehmen. Der erste Gewindegang, also der mit dem größten Außendurchmesser wird beim Einschrauben dagegen am wenigstens belastet und schneidet entsprechend wenig beansprucht in die Wandung der Bohrung ein. Der Gewindegang mit dem größten Durchmesser wird mithin vor Beschädigung geschont. Erst nach dem Einschrauben der Schraube entfaltet der erste Gewindegang, also der Gewindegang mit dem größten Außendurchmesser, seine Wirkung, und überträgt Haltekräfte in die Wandung der Bohrung, also in den festen Verankerungsgrund. Dadurch, dass sich der Gewindegang mit dem größten Außendurchmesser am tiefsten in die Wandung der Bohrung einschneidet, wird die Kraftübertragung von der Schraube auf den Verankerungsgrund verbessert.

Gleichwohl übertragen auch die anderen Gewindegänge Haltekräfte in die Wandung der Bohrung, so dass die Kräfte insgesamt besser verteilt in die Wandung der Bohrung übertragen werden.

Insgesamt hat sich herausgestellt, dass durch wenigstens drei Gewindegänge im Zusammenspiel mit den unterschiedlichen Abständen der Gewindegänge zueinander weniger Spannungen im Verankerungsgrund entstehen. Insbesondere bei weichem oder bröckeligem Verankerungsgrund, bevorzugt bei Gasbeton, lässt sich so der Abstand von nebeneinander angeordneten Bohrungen im Verankerungsgrund verringern. Die Anzahl von Bohrungen auf einer gegebenen Flächeneinheit kann also vorteilhaft erhöht werden.

Die unterschiedlichen Abstände der drei Gewindegänge zueinander verbessern im Zusammenspiel mit den unterschiedlichen Außendurchmessern der Gewindegänge die Kraftübertragung von der Schraube auf den Verankerungsgrund. Dabei ist der Abstand des ersten Gewindeganges zum zweiten Gewindegang vorzugsweise größer als der Abstand des zweiten Gewindeganges zum dritten Gewindegang, da so genanntes Bohrmehl, das nach dem Bohren in der Bohrung verblieben ist oder das beim Schneiden der Gewindegänge in die Wandung der Bohrung entsteht, ausreichend Freiraum zwischen dem zweiten und dritte Gewindegang hat.

Der Außendurchmesser eines Gewindeganges wird über den Gewindegrat gemessen. Jeder Gewindegang weist einen gleich bleibenden Außendurchmesser über die Länge des Schaftes auf. Vorzugsweise ist jeder Gewindegang als Spitzgewinde ausgebildet.

Eine Weiterbildung der Erfindung sieht vor, dass zwischen dem ersten und zweiten Gewindegang sowie zwischen dem zweiten und dem dritten Gewindegang umlaufende Vertiefungen vorgesehen sind, wobei die jede Vertiefung im Querschnitt vorzugsweise konkav ausgeformt ist. Die Vertiefung verläuft wie die Gewindegänge helixförmig.

In den Vertiefungen lässt sich das so genannte Bohrmehl, das nach dem Bohren in der Bohrung verblieben ist oder das beim Schneiden der Gewindegänge in die Wandung der Bohrung entsteht, sammeln, ohne dass dies auf die Wandung der Bohrung drückt und es zu ungewünschten Spannungen innerhalb der Wandung kommt.

Durch die im Querschnitt konkave Ausformung der Vertiefungen wird das Bohrmehl zudem vereinfacht entlang der helixförmigen Vertiefung in Richtung Bohrungsöffnung verschoben. Dadurch wird das Einschrauben der Schraube in den festen Verankerungsgrund zusätzlich erleichtert.

Gemäß einer vorteilhaften Ausgestaltung der Erfindung ist die Vertiefung umso tiefer, je geringer der Abstand zwischen den entsprechenden Gewindegängen ist.

Es hat sich gezeigt, dass auf diese Weise geringere Spannungen im Verankerungsgrund hervorgerufen werden. Dadurch kann der Abstand von nebeneinander angeordneten Bohrungen und der Randabstand im festen Verankerungsgrund verringert werden. Die Anzahl von Bohrungen auf einer gegebenen Flächeneinheit kann also vorteilhaft erhöht werden.

Weiterhin ist vorgesehen, dass die Gewindegänge eine Art Gewindeband bilden, das sich helixförmig zumindest teilweise über die Länge des Schaftes erstreckt, wobei die Steigung die Gewindebandes mindestens zwei Bandbreiten beträgt.

Dies hat sich als günstig für eine hohe Haltekraft der Schraube im festen Verankerungsgrund herausgestellt.

Eine vorteilhafte Ausgestaltung der Erfindung sieht vor, dass jeder Gewindegang einen vom anderen Gewindegang unterschiedlichen Flankenwinkel aufweist, wobei der Flankenwinkel vorzugsweise mit dem Außendurchmesser des Gewindeganges korreliert, derart, dass bei einem kleineren Außendurchmesser ein größerer Flankenwinkel vorgesehen ist und umgekehrt.

Als besonders günstig hat sich für den ersten Gewindegang ein Flankenwinkel von 8 bis 15°, für den zweiten Gewindegang von 16 bis 30° und für den dritten Gewindegang von 31 bis 45° herausgestellt.

Vorzugsweise sind die Außendurchmesser der Gewindegänge derart bemessen, dass sich die Gewindegänge beim Einschrauben in die Wandung der Bohrung eingraben und furchen.

Das bedeutet, dass der Durchmesser der Bohrung kleiner als der Außendurchmesser des kleinsten Gewindeganges ist, so dass sich auch der Gewindegang mit dem kleinsten Außendurchmesser in die Wandung der Bohrung einschneidet und zum Halt der Schraube im festen Verankerungsgrund beiträgt.

Die Erfindung betrifft auch eine in eine Bohrung eingeschraubte, gewindeformende Schraube, die nach einem Ansprüche 1 bis 6 ausgebildet ist.

Nachfolgend wird die Erfindung anhand zweier Ausführungsbeispiele erläutert, die in der Zeichnung dargestellt sind. In dieser zeigen
- Fig. 1: eine erfindungsgemäße gewindeformende Universalschraube
a) in perspektivischer Ansicht
b) in Seitenansicht
c) in Querschnittsansicht und
d) in Teilansicht (B)
sowie
- Fig. 2: eine erfindungsgemäße gewindeformende Verankerungsschraube
a) in perspektivischer Ansicht
b) in Seitenansicht
c) in Querschnittsansicht und
d) in Teilansicht (B).

In allen Figuren bezeichnen gleiche Bezugszeichen gleiche Bauteile.

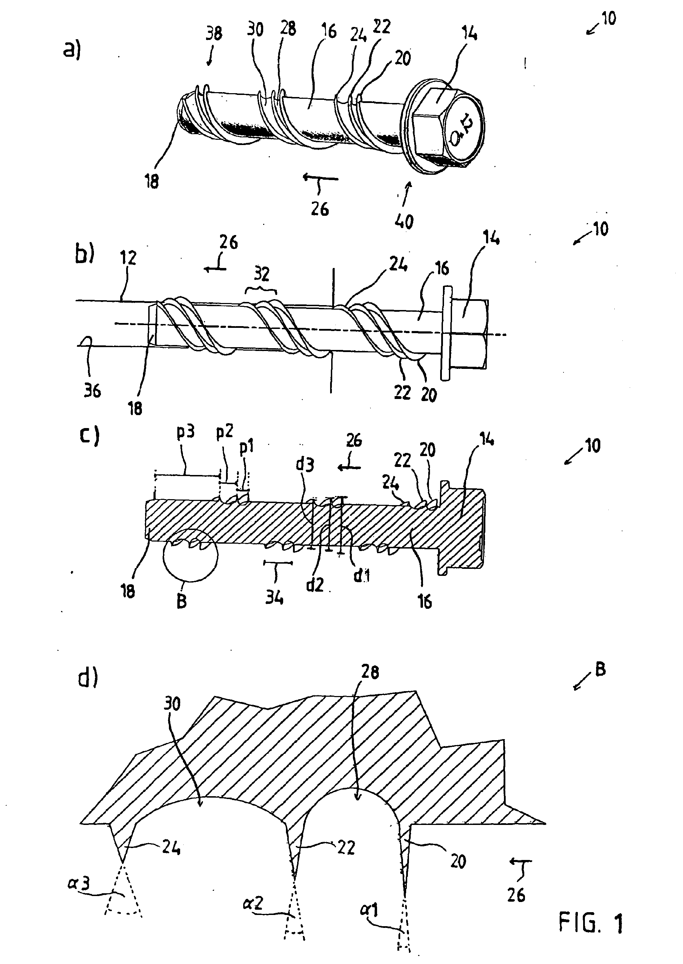

Die in Fig. 1 dargestellte, erfindungsgemäße gewindeformende Universalschraube 10 ist zum Einschrauben in eine Bohrung 12 in einen festen Verankerungsgrund vorgesehen.

Die Universalschraube 10 wird ohne Verwendung eines Dübels oder sonstigen Hilfsmittels in die Bohrung 12 eingeschraubt.

Die Universalschraube 10 weist eine kegelstumpfförmig verjüngte Spitze 18 an einem vorderen Schraubenende 38 und einen Schraubenkopf 14 an einem hinteren Schraubenende 40 auf. Die kegelstumpfförmig verjüngte Spitze 18 erleichtert das Einführen der Universalschraube 10 in eine Bohrung 12.

Im dargestellten Ausführungsbeispiel ist der Schraubenkopf 14 ein Sechskantkopf, diese Kopfform ist nicht zwingend.

Die Universalschraube 10 weist drei Gewindegänge 20, 22 und 24 auf, die parallel zueinander ausgebildet sind und sich helixförmig über die Länge des Schaftes 16 erstrecken.

Die Gewindegänge 20, 22, 24 weisen unterschiedliche Außendurchmesser d1, d2, d3 auf. Der Außendurchmesser d1 eines ersten Gewindeganges 20 ist größer als der Außendurchmesser d2 des in Setzrichtung 26 dem ersten Gewindegang 20 folgenden zweiten Gewindeganges 22.

Der Außendurchmesser d2 des zweiten Gewindeganges 22 ist größer als der Au-ßendurchmesser d3 des in Setzrichtung 26 dem zweiten Gewindegang 22 folgenden dritten Gewindeganges 24.

Der Abstand p1, p2 und p3 der Gewindegänge 20, 22 und 24 zueinander ist unterschiedlich.

Die Außendurchmesser d1, d2 und d3 sind jeweils größer als der Innendurchmesser der Bohrung 12, so dass sich beim Einschrauben der Universalschraube 10 in die Bohrung 12 alle Gewindegänge 20, 22, und 24 in die Wandung 36 der Bohrung 12 einschneiden.

Zwischen dem ersten und zweiten Gewindegang 20 und 22 sowie zwischen dem zweiten und dem dritten Gewindegang 22 und 24 sind umlaufende Vertiefungen 28 und 30 vorgesehen, wobei jede Vertiefung 28 und 30 im Querschnitt konkav ausgeformt ist.

Die Gewindegänge 20, 22 und 24 bilden eine Art Gewindeband 32, das sich helixförmig über die Länge des Schaftes 14 erstreckt, wobei die Steigung des Gewindebandes 32 mindestens die zweifache Bandbreite 34 beträgt.

Die Steigung der Universalschraube 10 ist der Abstand von einer Windung eines Gewindeganges 20, 22 oder 24 bis zur folgenden Windung desselben Gewindegangs 20, 22 oder 24, also die Summe der Abstände p1, p2 und p3 der Gewindegänge 20, 22, und 24 voneinander.

Die Bandbreite 34 ist entsprechend die Summe der Abstände p1 und p2 der Gewindegänge 20 und 22 sowie 22 und 24.

Die Gewindegänge 20, 22 und 24 sind als Spitzgewinde ausgebildet, wobei jeder Gewindegang 20, 22 und 24 einen vom anderen Gewindegang 20, 22 und 24 unterschiedlichen Flankenwinkel α1, α2 und α3 aufweist, der mit zunehmendem Außendurchmesser kleiner wird.

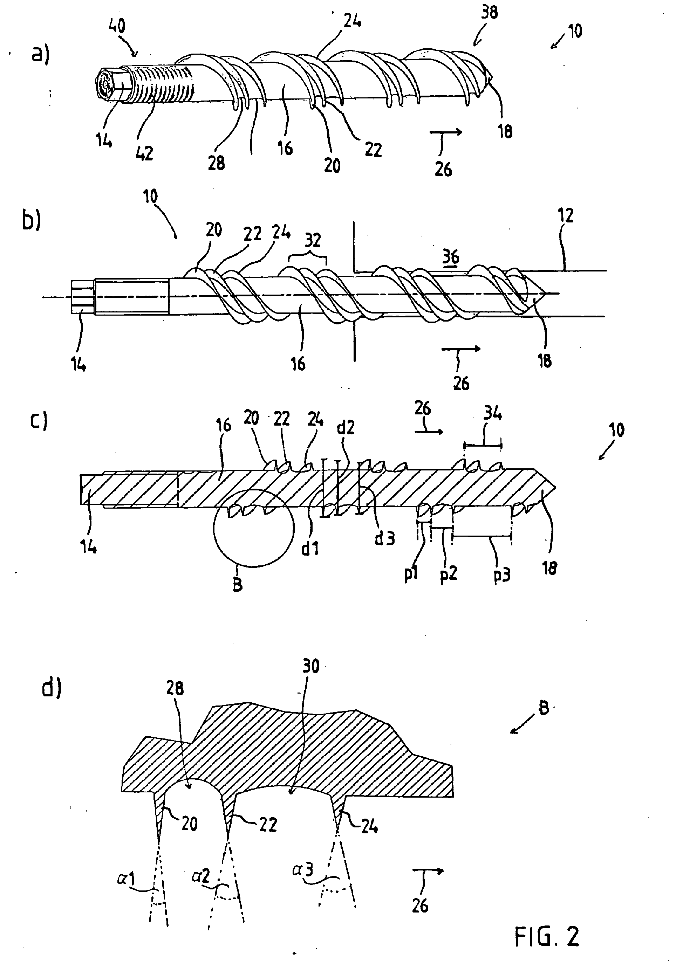

Die in Fig. 2 dargestellte, erfindungsgemäße gewindeformende Verankerungsschraube 10 ist ebenfalls zum Einschrauben in eine Bohrung 12 eines Mauerwerks vorgesehen.

Die Verankerungsschraube 10 wird ohne Verwendung eines Dübels oder sonstigen Hilfsmittels in die Bohrung 12 eingeschraubt.

Die Verankerungsschraube 10 weist eine kegelstumpfförmig verjüngte Spitze 18 an einem vorderen Schraubenende 38 und einen Schraubenkopf 14 an einem hinteren Schraubenende 40 auf. Das vordere Schraubenende 38 ist dasjenige, mit dem voraus die Verankerungsschraube 10 in die Bohrung 12 eingeschraubt wird. Das hintere Schraubenende 40 ist zum Ansetzen eines Drehwerkzeugs bzw. eines Drehschlagwerkzeugs vorgesehen.

Im dargestellten Ausführungsbeispiel ist der Schraubenkopf 14 ein Sechskantkopf, diese Kopfform ist nicht zwingend.

Zwischen vorderem und hinterem Schraubenende 38 und 40 erstreckt sich ein im Wesentlichen zylindrischer Schaft 16. Dieser Schaft 16 weist einen oberen und einen unteren Abschnitt auf, auf den jeweils Schraubengewinde unterschiedlicher Ausführungen ausgebildet sind. Die Verankerungsschraube 10 wird mit dem unteren Abschnitt in eine Bohrung 12 eines Mauerwerks geschraubt. Der obere Abschnitt mit dem bevorzugt eingängigen Gewinde 42 verbleibt außerhalb der Bohrung 12 und dient der Befestigung eines Gegenstandes, beispielsweise durch Aufschrauben einer hier nicht dargestellten Mutter.

Die Verankerungsschraube 10 weist im unteren Abschnitt drei Gewindegänge 20, 22 und 24 auf, die parallel zueinander ausgebildet sind und sich helixförmig über den genannten Abschnitt des Schaftes 16 erstrecken.

Die Gewindegänge 20, 22, 24 weisen unterschiedliche Außendurchmesser d1, d2, d3 auf. Der Außendurchmesser d1 eines ersten Gewindeganges 20 ist größer als der Außendurchmesser d2 des in Setzrichtung 26 dem ersten Gewindegang 20 folgenden zweiten Gewindeganges 22.

Der Außendurchmesser d2 des zweiten Gewindeganges 22 ist größer als der Au-ßendurchmesser d3 des in Setzrichtung 26 dem zweiten Gewindegang 22 folgenden dritten Gewindeganges 24.

Der Abstand p1, p2 und p3 der Gewindegänge 20, 22 und 24 zueinander ist unterschiedlich.

Die Außendurchmesser d1, d2 und d3 sind jeweils größer als der Innendurchmesser der Bohrung 12, so dass sich beim Einschrauben der Universalschraube 10 in die Bohrung 12 alle Gewindegänge 20, 22, und 24 in die Wandung 36 der Bohrung 12 einschneiden.

Zwischen dem ersten und zweiten Gewindegang 20 und 22 sowie zwischen dem zweiten und dem dritten Gewindegang 22 und 24 sind umlaufende Vertiefungen 28 und 30 vorgesehen, wobei jede Vertiefung 28 und 30 im Querschnitt konkav ausgeformt ist.

Die Gewindegänge 20, 22 und 24 bilden eine Art Gewindeband 32, das sich helixförmig über die Länge des Schaftes 14 erstreckt, wobei die Steigung des Gewindebandes 32 mindestens die zweifache Bandbreite 34 beträgt.

Die Steigung der Verankerungsschraube 10 ist der Abstand von einer Windung eines Gewindeganges 20, 22 oder 24 bis zur folgenden Windung desselben Gewindegangs 20, 22 oder 24, also die Summe der Abstände p1, p2 und p3 der Gewindegänge 20, 22, und 24 voneinander.

Die Bandbreite 34 ist entsprechend die Summe der Abstände p1 und p2 der Gewindegänge 20 und 22 sowie 22 und 24.

Die Gewindegänge 20, 22 und 24 sind als Spitzgewinde ausgebildet, wobei jeder Gewindegang 20, 22 und 24 einen vom anderen Gewindegang 20, 22 und 24 unterschiedlichen Flankenwinkel α1, α2 und α3 aufweist.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

### Bezugszeichenliste

### (ist Teil der Beschreibung)

- 10: Schraube
- 12: Bohrung
- 14: Schraubenkopf
- 16: Schaft
- 18: Spitze
- 20: 1. Gewindegang
- 22: 2. Gewindegang
- 24: 3. Gewindegang
- 26: Setzrichtung
- 28: 1. Vertiefung
- 30: 2. Vertiefung
- 32: Gewindeband
- 34: Bandbreite
- 36: Wandung
- 38: vorderes Schraubenende
- 40: hinteres Schraubenende
- 42: eingängiges Gewinde
- d1: 1. Außendurchmesser

- d2: 2. Außendurchmesser
- d3: 3. Außendurchmesser

- p1: 1. Abstand
- p2: 2. Abstand
- p3: 3. Abstand

- α1: 1. Flankenwinkel
- α2: 2. Flankenwinkel
- α3: 3. Flankenwinkel

## Patentansprüche

1. Gewindeformende Schraube (10) zum direkten Einschrauben in eine Bohrung (12), die in einem festen Verankerungsgrund eingebracht ist, wobei die Schraube (10) einen Schraubenkopf (14) mit einem Werkzeugangriff, einen im wesentlichen zylindrischen Schaft (16) und vorzugsweise eine kegelstumpfartig oder pyramidenstumpfartig verjüngte Spitze (18) aufweist, **dadurch gekennzeichnet, dass** die Schraube (10) drei oder mehr, vorzugsweise jedoch drei Gewindegänge (20, 22, 24) aufweist, die parallel zueinander ausgebildet sind und sich helixförmig zumindest teilweise über die Länge des Schaftes (16) erstrecken, dass die Gewindegänge (20, 22, 24) unterschiedliche Außendurchmesser (d1, d2, d3) aufweisen, wobei der Außendurchmesser (d1) eines ersten Gewindeganges (20) größer ist als der Außendurchmesser (d2) des in Setzrichtung (26) dem ersten Gewindegang (20) folgenden zweiten Gewindeganges (22), und der Außendurchmesser (d2) des zweiten Gewindeganges (22) größer ist als der Außendurchmesser (d3) des in Setzrichtung (26) dem zweiten Gewindegang (22) folgenden dritten Gewindeganges (24), und dass der Abstand (p1, p2, p3) der Gewindegänge (20, 22, 24) zueinander unterschiedlich ist.

2. Schraube (10) nach Anspruch 1, **dadurch gekennzeichnet, dass** zwischen dem ersten und zweiten Gewindegang (20, 22) sowie zwischen dem zweiten und dem dritten Gewindegang (22, 24) umlaufende Vertiefungen (28, 30) vorgesehen sind, wobei die Vertiefung (28, 30) im Querschnitt vorzugsweise konkav ausgeformt ist.

3. Schraube (10) nach Anspruch 2, **dadurch gekennzeichnet, dass** die Vertiefung umso tiefer ist, je geringer der Abstand (p1, p2) zwischen den entsprechenden Gewindegängen (20, 22, 24) ist.

4. Schraube (10) nach einem der Ansprüche 1 bis 3, **dadurch gekennzeichnet, dass** die Gewindegänge (20, 22, 24) eine Art Gewindeband (32) bilden, das sich helixförmig zumindest teilweise über die Länge des Schaftes (14) erstreckt, wobei die Steigung des Gewindebandes (32) mindestens eine Bandbreite (34) beträgt.

5. Schraube (10) nach einem der Ansprüche 1 bis 4, **dadurch gekennzeichnet, dass** jeder Gewindegang (20, 22, 24) einen vom anderen Gewindegang (20, 22, 24) unterschiedlichen Flankenwinkel (α1, α2, α3) aufweist.

6. Schraube (10) nach einem der Ansprüche 1 bis 5, **dadurch gekennzeichnet, dass** die Außendurchmesser (d1, d2, d3) der Gewindegänge (20, 22, 24) derart bemessen sind, dass sich die Gewindegänge (20, 22, 24) beim Einschrauben in die Wandung (36) der Bohrung (12) eingraben und furchen.

7. In eine Bohrung (12) eingeschraubte, gewindeformende Schraube (10), die nach einem der Ansprüche 1 bis 6 ausgebildet ist.

## Claims

1. Self-tapping screw (10) for direct screwing into a bore (12) which is formed in a solid anchoring base, wherein the screw (10) has a screw head (14) with a tool notch, an essentially cylindrical shaft (16) and preferably a tip (18) which tapers in the form of a truncated cone or pyramid, **characterised in that** the screw (10) has three or more, but preferably three, thread turns (20, 22, 24) which are formed parallel to one another and extend in a helical manner at least partially over the length of the shaft (16), **in that** the thread turns (20, 22, 24) have different outer diameters (d1, d2, d3), wherein the outer diameter (d1) of a first thread turn (20) is larger than the outer diameter (d2) of the second thread turn (22) which follows the first thread turn (20) in the insertion direction (26), and the outer diameter (d2) of the second thread turn (22) is larger than the outer diameter (d3) of the third thread turn (24) which follows the second thread turn (22) in the insertion direction (26), and **in that** the distance (p1, p2, p3) of the thread turns (20, 22, 24) from one another is different.

2. Screw (10) according to claim 1, **characterised in that** circumferential depressions (28, 30) are provided between the first and second thread turn (20, 22) and between the second and third thread turn (22, 24), the depression (28, 30) preferably being of concave shape in cross section.

3. Screw (10) according to claim 2, **characterised in that** the depression is deeper the smaller the distance (p1, p2) between the corresponding thread turns (20, 22, 24).

4. Screw (10) according to one of claims 1 to 3, **characterised in that** the thread turns (20, 22, 24) form a type of thread strip (32) which extends in a helical manner at least partially over the length of the shaft (14), the pitch of the thread strip (32) being at least one strip width (34).

5. Screw (10) according to one of claims 1 to 4, **characterised in that** each thread turn (20, 22, 24) has a flank angle (α1, α2, α3) different from the other thread turn (20, 22, 24).

6. Screw (10) according to one of claims 1 to 5, **characterised in that** the outer diameter (d1, d2, d3) of the thread turns (20, 22, 24) is such that the thread turns (20, 22, 24) dig into and cut the wall (36) of the bore (12) during the screwing-in operation.

7. Self-tapping screw (10) formed according to one of claims 1 to 6 which is screwed into a bore (12).

## Revendications

1. Vis taraudeuse (10) destinée à être vissée directement dans une forure (12) pratiquée dans un fond d'ancrage solide, la vis (10) présentant une tête de vis (14) avec une attaque d'outil, une tige essentiellement cylindrique (16) et, de préférence, une pointe (18) diminuée de manière à former un cône tronqué ou une pyramide tronquée, **caractérisée en ce que** la vis (10) présente trois pas de vis ou plus, de préférence trois pas de vis (20, 22, 24), qui sont conçus parallèles l'un par rapport à l'autre et qui s'étendent en forme d'hélice au moins partiellement sur toute la longueur de la tige (16), **en ce que** les pas de vis (20, 22, 24) présentent des diamètres extérieurs différents (d1, d2, d3), le diamètre extérieur (d1) d'un premier pas de vis (20) étant supérieur au diamètre extérieur (d2) du second pas de vis (22), qui suit le premier pas de vis (20) dans le sens de pose (26), **en ce que** le diamètre extérieur (d2) du second pas de vis (22) est supérieur au diamètre extérieur (d3) du troisième pas de vis (24), qui suit le second pas de vis (22) dans le sens de pose (26) et **en ce que** la distance (p1, p2, p3) des pas de vis (20, 22, 24), l'un par rapport à l'autre, est différente.

2. Vis (10) suivant la revendication 1, **caractérisée en ce qu'**entre le premier et le second pas de vis (20, 22), ainsi qu'entre le second et le troisième pas de vis (22, 24) sont prévues des gorges périphériques (28, 30), la section transversale de la gorge (28, 30) étant conçue de préférence concave.

3. Vis (10) suivant la revendication 2, **caractérisée en ce que** la gorge est d'autant plus profonde que la distance (p1, p2) entre les différents pas de vis (20, 22, 24) correspondants est plus petite.

4. Vis (10) suivant une des revendications 1 à 3, **caractérisée en ce que** les pas de vis (20, 22, 24) forment une sorte de taraudage en bande (32) s'étendant en forme d'hélice au moins partiellement sur toute la longueur de la tige (14), le pas du taraudage en bande (32) s'élevant à au moins une largeur de bande (34).

5. Vis (10) suivant une des revendications 1 à 4, **caractérisée en ce que** chaque pas (20, 22, 24) présente un angle de flanc différent (α1, α2, α3).

6. Vis (10) suivant une des revendications 1 à 5, **caractérisée en ce que** les diamètres extérieurs (d1, d2, d3) des pas de vis (20, 22, 24) sont dimensionnés de manière à ce que les pas de vis (20, 22, 24) s'enfoncent, lors du vissage dans la paroi (36) de la forure (12), en rainurant celle-ci.

7. Vis taraudeuse (10) vissée dans une forure (12) et conçue suivant une des revendications 1 à 6.
